# DEMANDE DE BREVET EUROPEEN

(11) **EP 4 846 841 A1**
(43) Date de publication de la demande: **02.12.2026**
(21) Numéro de dépôt: 25178898.0
(22) Date de dépôt: 26.05.2025
(51) Int. Cl.: A01K 5/01, A01K 5/02, A01K 29/00, A01K 15/02

(54) **SYSTÈME DE DISTRIBUTION DE NOURRITURE POUR ANIMAUX**

(71) Demandeur: Bajan, Christophe, Tsukuba Ibaraki 305-0051 (JP)
(72) Inventeur: Bajan, Christophe, Tsukuba Ibaraki 305-0051 (JP)
(74) Mandataire: Tranvouez, Edern Morgan

(57) **Abrégé**

L'invention concerne un système de distribution de nourriture pour animaux destiné à être associé avec un dispositif d'activité physique (20) pour animaux, le système de distribution de nourriture comprenant un réservoir (21) de nourriture, un mécanisme de distribution (22) configuré pour libérer une portion de ladite nourriture, le système de distribution étant remarquable en ce qu'il comporte :
- une unité de commande (25) configurée pour déterminer la réalisation d'une activité physique sur le dispositif d'activité physique (20) et pour déclencher le mécanisme de distribution (22) lorsque l'activité physique a été déterminée.

## Description

### Domaine technique de l'invention

La présente invention concerne un système de distribution de nourriture pour animaux. Elle s'applique, dans le domaine de l'alimentation animale, de l'électronique, et de l'informatique.

### Technique antérieure

Plusieurs dispositifs ont été développés pour stimuler l'activité physique des animaux domestiques. Parmi les solutions classiques figurent les arbres à chats, les jouets interactifs et les roues d'exercice. Ces équipements visent à favoriser l'exercice spontané de l'animal, mais leur efficacité dépend souvent de la disponibilité et de l'implication du propriétaire.

Cependant, les solutions classiques comportent des limitations.

Les arbres à chats et jouets interactifs nécessitent souvent l'interaction du propriétaire, ce qui n'est pas toujours possible.

Les roues d'exercice, ou autres dispositifs d'activité physique peuvent être peu attractifs pour les animaux s'ils ne sont pas associés à un *stimulus.*

En parallèle, des distributeurs automatiques de friandises ont été introduits sur le marché afin de gérer l'alimentation de manière autonome. Ces dispositifs sont généralement programmés pour délivrer des portions de nourriture à intervalles réguliers, offrant une solution pratique pour les absences prolongées des propriétaires. Cependant, leur fonctionnement repose sur des cycles fixes, ce qui limite leur capacité à prévenir les risques de suralimentation.

Chaque solution repose sur une intervention humaine différée.

### Présentation de l'invention

La présente invention vise à remédier à ces inconvénients avec une approche totalement novatrice.

Un objectif de l'invention est de fournir un tel système, qui puisse être adaptée aisément à des systèmes existants.

Ces objectifs, ainsi que d'autres qui apparaîtront par la suite, sont atteints, selon un premier aspect, à l'aide d'un système de distribution de nourriture pour animaux destiné à être associé avec un dispositif d'activité physique pour animaux, le système de distribution de nourriture comprenant un réservoir de nourriture, un mécanisme de distribution configuré pour libérer une portion de ladite nourriture, le système de distribution étant remarquable en ce qu'il comporte :
- une unité de commande configurée pour déterminer la réalisation d'une activité physique sur le dispositif d'activité physique et pour déclencher le mécanisme de distribution lorsque l'activité physique a été déterminée.

Par nourriture, il est entendu ici et dans le reste de ce document aussi bien la nourriture en tant que telle, c'est-à-dire les aliments à titre purement alimentaire que les nourritures plus récréatives que sont les friandises et qui ne présentent généralement peu ou pas d'intérêt nutritionnelle.

L'activité physique chez un animal correspond à un ensemble d'actions motrices détectées sur un dispositif d'activité physique, témoignant d'une implication physique réelle de l'animal. Cette activité est identifiée par l'unité de commande comme la condition préalable au déclenchement de la distribution de nourriture.

Le système permet de conditionner la distribution de nourriture (ou d'une friandise) à la réalisation effective d'une activité physique par l'animal sur le dispositif d'activité physique. Cet agencement crée une corrélation directe entre l'utilisation du dispositif d'activité physique et la récompense alimentaire.

L'intégration d'une unité de commande configurée pour déterminer la réalisation d'une activité physique automatise la détection de cette activité sans intervention humaine. Cela assure une gestion autonome de l'interaction entre l'animal et le dispositif d'activité physique, rendant le système opérationnel en continu, même en l'absence du propriétaire.

L'invention est avantageusement mise en œuvre selon les modes de réalisation et les variantes exposées ci-après, lesquelles sont à considérer individuellement ou selon toute combinaison techniquement opérante.

Dans un mode de réalisation, le système comporte un capteur d'activité apte à être couplé avec le dispositif d'activité physique, ledit capteur d'activité étant conformé pour détecter et/ou mesurer une activité physique réalisée par un animal à partir du dispositif d'activité physique, l'unité de commande étant en outre configurée pour communiquer avec le capteur d'activité afin de déterminer la réalisation de l'activité physique

Grâce à ces dispositions, l'intégration d'un capteur d'activité apte à être couplé avec le dispositif d'activité physique permet d'assurer une détection précise de l'activité réalisée par l'animal sur le dispositif d'activité physique. Il améliore la fiabilité et la pertinence de la mesure de l'effort physique, en s'appuyant sur un capteur spécifiquement adapté au dispositif d'activité physique et aux comportements de l'animal.

Dans un mode de réalisation, l'unité de commande est configurée pour communiquer avec le capteur d'activité selon un protocole de communication sans fil, ce protocole étant avantageusement choisi parmi les protocoles wifi^{®}, bluetooth^{®} et zigbee^{®}.

Grâce à ces dispositions, l'utilisation d'un protocole de communication sans fil pour relier le capteur d'activité à l'unité de commande permet de s'affranchir des connexions filaires. Simplifier l'installation du capteur sur ou à proximité du dispositif d'activité physique, sans contrainte de câblage, favorise une meilleure adaptation à différents environnements domestiques.

Dans un mode de réalisation, le système comporte une unité de communication apte à se connecter au dispositif d'activité physique afin de récupérer une information relative à la réalisation d'une activité physique, l'unité de commande étant en outre configurée pour communiquer avec l'unité de communication afin de déterminer la réalisation de l'activité physique

L'intégration d'une unité de communication dédiée à la récupération d'informations relatives à l'activité physique permet d'externaliser cette fonction par rapport à l'unité de commande.

Dans un mode de réalisation, une activité physique est considérée comme réalisée lorsqu'elle dépasse un seuil prédéfini d'activité, ledit seuil prédéfini étant avantageusement paramétrable.

Dans un mode de réalisation, le seuil prédéfini d'activité est sélectionné parmi au moins l'une des sélections suivantes : une durée d'activation du dispositif d'activité, une quantité de calorie dépensée par un animal avec le dispositif d'activité et une durée d'activité à une intensité prédéfinie par un animal avec le dispositif d'activité.

Dans un mode de réalisation, le système comprend en outre une interface utilisateur permettant de régler au moins un paramètre de l'unité de commande.

Dans un mode de réalisation, l'unité de commande est configurée pour communiquer avec un dispositif de communication d'un utilisateur, tel qu'un téléphone ou un ordinateur personnel, afin d'autoriser le réglage d'au moins un paramètre de l'unité de commande.

Dans un mode de réalisation, le mécanisme de distribution est configuré pour délivrer une portion de nourriture calibrée, ladite portion est un volume de nourriture compris entre 1g et 350g.

Selon un deuxième aspect, la présente invention vise un ensemble d'activité physique et de distribution de nourriture pour animaux comprenant
- un système de distribution de nourriture ;
- un dispositif d'activité physique associé audit système de distribution de nourriture.

Les avantages, buts et caractéristiques particulières de cet ensemble étant similaires à ceux du système objet de la présente invention, ils ne sont pas rappelés ici.

Dans un mode de réalisation, le dispositif d'activité physique comprend une roue d'exercice.

Dans un mode de réalisation, le dispositif d'activité physique comprend un tapis roulant.

Selon un troisième aspect, la présente invention vise un procédé d'utilisation d'un système de distribution de nourriture pour animaux, ledit système de distribution de nourriture étant associé à un dispositif d'activité physique, ledit procédé comprenant les étapes suivantes :
- faire utiliser par un animal le dispositif d'activité physique afin de générer une activité physique ;
- détecter l'activité physique réalisée par l'animal à partir du dispositif d'activité physique ;
- déclencher le mécanisme de distribution pour libérer une portion de nourriture lorsque l'activité physique a été détectée.

### Brève description des figures

D'autres avantages, buts et caractéristiques de la présente invention ressortent de la description qui suit, faite dans un but explicatif et nullement limitatif, en regard des dessins annexés, dans lesquels :
La figure 1 représente un schéma de fonctionnement d'un système de distribution de nourriture.
La figure 2 représente un second schéma de fonctionnement du système de distribution ;
La figure 3 représente les étapes d'un procédé d'utilisation d'un système de distribution de nourriture.

### Description des modes de réalisation

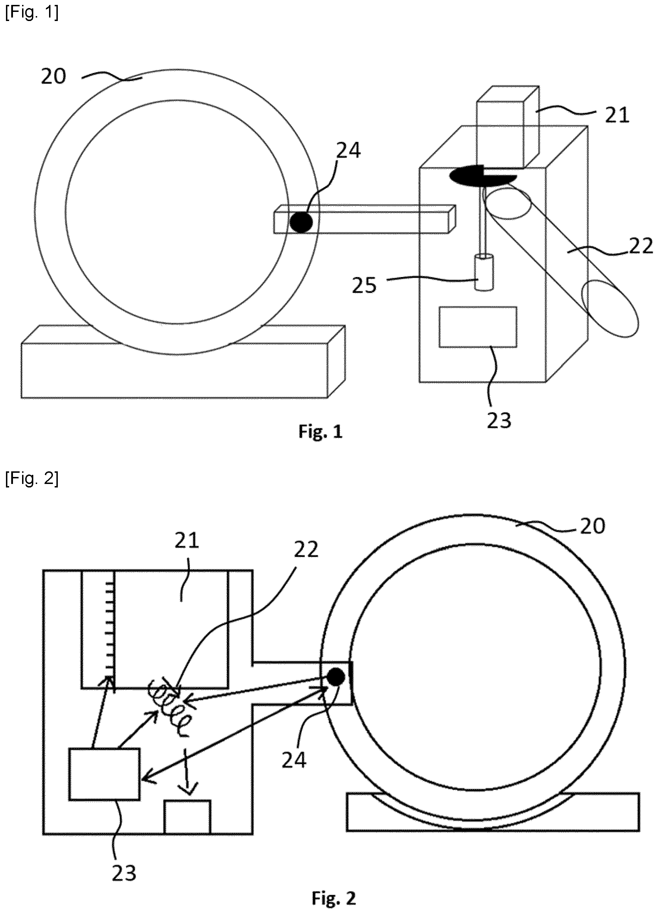

La figure 1 montre un schéma de fonctionnement d'un système de distribution de nourriture.

Ce système de distribution de nourriture est destiné aux animaux et à être associé avec un dispositif d'activité physique 20 pour animaux.

Ce système de distribution comporte un réservoir 21 de nourriture (et/ou de friandises à destination des animaux).

Selon un exemple, le réservoir 21 de nourriture est un conteneur.

Ce réservoir 21 de nourriture comporte une trappe.

Cette trappe permet de faciliter le remplissage de nourriture.

Le réservoir 21 de nourriture dispose d'un indicateur.

Selon un exemple, cet indicateur est visuel.

L'indicateur visuel permet de surveiller le niveau de nourriture (ou de friandise) restant.

Le système de distribution comporte un mécanisme de distribution 22.

Ce mécanisme de distribution 22 est configuré pour libérer une portion de nourriture.

Le mécanisme de distribution 22 est positionné sous le réservoir 21 de nourriture. Cela permet de réguler la libération de la nourriture et de distribuer une ou des portions de nourriture de manière fiable et contrôlée.

Selon une variante, le mécanisme de distribution 22 est positionné près du dispositif d'activité physique 20.

La portion de nourriture est calibrée.

Selon un exemple de portion de nourriture, la nourriture est sèche.

La portion de nourriture contient un volume de nourriture compris entre 1g et 350g, voire entre 40 et 300 g.

Selon une variante, le mécanisme de distribution 22 comporte un système de distribution de portions variables.

Ce système de distribution calibre automatiquement la nourriture en fonction des besoins spécifiques de l'animal

Selon une variante de système de distribution, il comporte un tapis roulant doseur ou un distributeur pneumatique.

En variante, le système de distribution peut être configuré pour distribuer une portion de nourriture après le dépassement d'un seuil d'activité physique donné.

Le système de distribution comporte une unité de commande 25.

Cette unité de commande 25 est configurée pour déterminer la réalisation d'une activité physique de l'animal.

Le terme activité physique pour un animal correspond à l'effort physique que fait l'animal sur le dispositif d'activité physique 20.

Le dispositif d'activité physique 20 comporte un élément roulant.

L'animal va courir sur l'élément roulant du dispositif d'activité physique 20.

Selon un exemple de réalisation, l'élément roulant est une roue ou un tapis roulant ou d'autre dispositifs favorisant l'exercice physique.

Le dispositif d'activité physique 20 est connecté avec l'unité de commande 25 par l'intermédiaire d'un couplage avec un capteur d'activité 24.

Lorsque l'activité physique a été détectée, l'unité de commande 25 déclenche le mécanisme de distribution 22.

Le capteur d'activité 24 est conformé pour détecter et/ou mesurer une activité physique réalisée par un animal à partir du dispositif d'activité physique 20.

L'unité de commande 25 communique avec le capteur d'activité 24 afin de déterminer la réalisation de l'activité physique

La communication se faite par des signaux de données.

Le mécanisme de distribution 22 est actionné par l'unité de commande 25 sur la base des signaux de données du capteur d'activité 24.

Selon un exemple de capteur, le capteur comprend un capteur de mouvement, un cardiofréquencemètre, un capteur de température, un capteur biométrique, un accéléromètre, un gyroscope, une caméra, ou un capteur à effet hall.

Selon une variante, l'animal comporte un collier intégrant le capteur d'activité 24. Ce collier communique à distance avec le dispositif d'activité physique 20. Cela permet une mesure plus précise de l'effort.

L'unité de commande 25 actionne le mécanisme de distribution 22 électroniquement.

Selon un exemple réalisé, l'unité de commande 25 communique avec le capteur d'activité 24 selon un protocole de communication sans fil.

Le protocole de communication sans fil est choisi parmi les protocoles suivants : protocole wifi^{®}, protocole bluetooth^{®} et protocole zigbee^{®}.

Selon une variante, l'unité de commande 25 communique avec le capteur d'activité 24 à partir d'une connexion filaire.

Le système de distribution comporte une unité de communication.

Cette unité de communication est apte à se connecter au dispositif d'activité physique 20. Cela permet de récupérer une information relative à la réalisation d'une activité physique.

L'information relative à la réalisation d'une activité physique est au moins l'une des informations suivantes : un mouvement soudain de l'élément roulant, une détection de signaux du capteur d'activité 24.

Cette unité de communication communique avec l'unité de commande 25.

Cette communication permet de déterminer la réalisation de l'activité physique.

L'activité physique est considérée comme réalisée lorsqu'elle dépasse un seuil prédéfini d'activité.

Ce seuil prédéfini d'activité est paramétrable.

Le seuil prédéfini d'activité est sélectionné parmi au moins l'une des sélections suivantes : une durée d'activation du dispositif d'activité, une quantité de calorie dépensée par un animal avec le dispositif d'activité et une durée d'activité à une intensité prédéfinie par un animal avec le dispositif d'activité.

Le système de distribution comporte une interface utilisateur 23.

Cette interface utilisateur 23 comporte un panneau de commande. Cela permet de régler au moins un paramètre de l'unité de commande 25 et de paramétrer le seuil d'activité physique prédéfini.

Ce seuil d'activité physique prédéfini est choisi en fonction du type d'animal.

Le paramètre est au moins l'un des éléments suivants : la distribution de la nourriture, la quantité de nourriture distribuée, la visualisation des données telles que l'activité mesurée, la quantité de nourriture restante, et la durée d'activité physique de l'animal.

Ce panneau de commande est positionné en-dessous du réservoir 21.

Le panneau de commande est tactile.

Selon un exemple de panneau de commande, il comporte un écran, des boutons et/ou d'autres moyens de saisie et d'affichage.

De manière alternative à l'interface utilisateur 23 ou en complément avec cette dernière, l'unité de commande 25 est connectable avec un dispositif de communication d'un utilisateur.

Le dispositif de communication d'un utilisateur est l'un des éléments suivants : un téléphone, un smartphone, une tablette, un ordinateur, une montre connectée.

L'unité de commande 25 communique avec le dispositif de communication. Cela permet d'autoriser le réglage d'au moins un paramètre de l'unité de commande 25.

Selon un exemple de réalisation, le système de distribution est configuré pour au moins deux animaux.

L'unité de commande 25 fait une gestion des animaux présents en créant des profils.

Chaque profil comporte des modules configurés pour modifier le seuil d'activité physique prédéfini ou la portion de nourriture.

Selon une variante, l'unité de commande 25 est reliée avec un détecteur permettant d'identifier un animal ou plusieurs animaux utilisant le système.

Le suivi de chaque profil est observable via un logiciel, tel que qu'une application mobile, une interface d'un site internet.

Ce suivi permet de suivre à distance chaque animal individuellement.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

La figure 2 montre un second schéma de fonctionnement du système de distribution.

Cette figure comporte des caractéristiques techniques similaires à celle de la figure précédente.

Ce schéma montre un ensemble d'activité physique et de distribution de nourriture.

Cet ensemble comporte un système de distribution de nourriture et un dispositif d'activité physique 20.

Le dispositif d'activité physique 20 est associé avec le système distribution de nourriture.

Le dispositif d'activité physique 20 comporte une roue d'exercice et un tapis roulant.

Le système de distribution de nourriture comporte un réservoir 21 de nourriture, une interface utilisateur 23, un mécanisme de distribution 22 et un capteur d'activité 24.

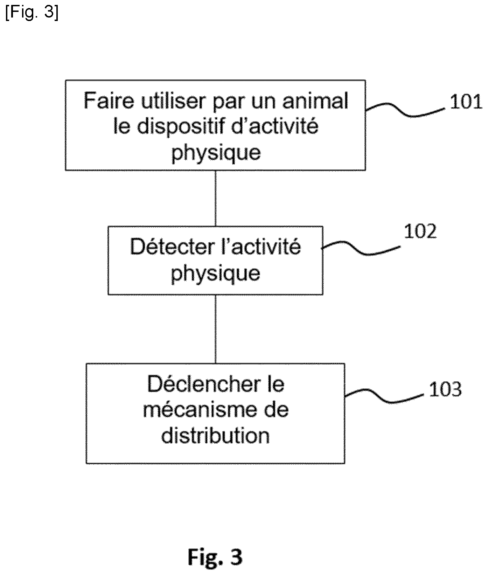

La figure 3 montre les étapes d'un procédé d'utilisation d'un système de distribution de nourriture.

Ce procédé comporte des caractéristiques techniques similaires à celle des figures précédentes.

L'étape 101 représente l'utilisation du dispositif d'activité physique par un animal.

Cette étape permet de générer une activité physique.

L'étape 102 représente la détection de l'activité physique.

La détection est faite à partir du dispositif d'activité physique.

L'étape 103 représente le déclenchement du mécanisme de distribution pour libérer une portion de nourriture.

Ce déclenchement s'active lorsque l'activité physique a été détectée.

Il est souligné que toutes les caractéristiques, telles qu'elles se dégagent pour un homme du métier à partir de la présente description, des dessins et des caractéristiques attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'ait pas été expressément exclu ou que des circonstances techniques ne rendent de telles combinaisons impossibles ou dénuées de sens.

### LISTE DES SIGNES DE RÉFÉRENCE

**[Table 1]**

| Références | Désignations |
|---|---|
| 20 | Dispositif d'activité physique |
| 21 | Réservoir |
| 22 | Mécanisme de distribution |
| 23 | Interface utilisateur |
| 24 | Capteur d'activité |
| 25 | Unité de commande |

## Revendications

1. Système de distribution de nourriture pour animaux destiné à être associé avec un dispositif d'activité physique (20) pour animaux, le système de distribution de nourriture comprenant un réservoir (21) de nourriture, un mécanisme de distribution (22) configuré pour libérer une portion de ladite nourriture, le système de distribution étant **caractérisé en ce qu'**il comporte :
- une unité de commande (25) configurée pour déterminer la réalisation d'une activité physique sur le dispositif d'activité physique (20) et pour déclencher le mécanisme de distribution (22) lorsque l'activité physique a été déterminée.

2. Système de distribution de nourriture selon la revendication 1, comprenant un capteur d'activité (24) apte à être couplé avec le dispositif d'activité physique (20), ledit capteur d'activité (24) étant conformé pour détecter et/ou mesurer une activité physique réalisée par un animal à partir du dispositif d'activité physique (20), l'unité de commande (25) étant en outre configurée pour communiquer avec le capteur d'activité (24) afin de déterminer la réalisation de l'activité physique.

3. Système de de distribution de nourriture selon la revendication 2, dans lequel l'unité de commande (25) est configurée communiquer avec le capteur d'activité (24) selon un protocole de communication sans fil, ce protocole étant avantageusement choisi parmi les protocoles wifi^{®}, bluetooth^{®} et zigbee^{®}.

4. Système de distribution de nourriture selon la revendication 1, comprenant une unité de communication apte à se connecter au dispositif d'activité physique (20) afin de récupérer une information relative à la réalisation d'une activité physique, l'unité de commande (25) étant en outre configurée pour communiquer avec l'unité de communication afin de déterminer la réalisation de l'activité physique.

5. Système de distribution de nourriture selon l'une quelconque des revendications 1 à 4, dans lequel une activité physique est considérée comme réalisée lorsqu'elle dépasse un seuil prédéfini d'activité, ledit seuil prédéfini étant avantageusement paramétrable.

6. Système de distribution de nourriture selon la revendication 5, dans lequel le seuil prédéfini d'activité est sélectionné parmi au moins l'une des sélections suivantes : une durée d'activation du dispositif d'activité, une quantité de calorie dépensée par un animal avec le dispositif d'activité et une durée d'activité à une intensité prédéfinie par un animal avec le dispositif d'activité.

7. Système de distribution de nourriture selon l'une des revendications 1 à 6 comprenant en outre une interface utilisateur (23) permettant de régler au moins un paramètre de l'unité de commande (25).

8. Système de distribution de nourriture selon l'une des revendications 1 à 7 dans laquelle l'unité de commande (25) est configurée pour communiquer avec un dispositif de communication d'un utilisateur, tel qu'un téléphone ou un ordinateur personnel, afin d'autoriser le réglage d'au moins un paramètre de l'unité de commande (25).

9. Système de distribution de nourriture selon l'une des revendications 1 à 8, dans lequel le mécanisme de distribution (22) est configuré pour délivrer une portion de nourriture calibrée, ladite portion est un volume de nourriture compris entre 1g et 350g.

10. Ensemble d'activité physique et de distribution de nourriture pour animaux comprenant :
- un système de distribution de nourriture selon l'une quelconque des revendications 1 à 9 ;
- un dispositif d'activité physique (20) associé audit système de distribution de nourriture.

11. Ensemble d'activité physique et de distribution de nourriture selon la revendication 10, dans lequel le dispositif d'activité physique (20) comprend une roue d'exercice.

12. Ensemble d'activité physique et de distribution de nourriture selon la revendication 10 ou 11, dans lequel le dispositif d'activité physique (20) comprend un tapis roulant.

13. Procédé d'utilisation d'un système de distribution de nourriture pour animaux selon l'une des revendications 1 à 9, ledit système de distribution de nourriture étant associé à un dispositif d'activité physique (20), ledit procédé comprenant les étapes suivantes :
- faire utiliser par un animal le dispositif d'activité physique (20) afin de générer une activité physique ;
- détecter l'activité physique réalisée par l'animal à partir du dispositif d'activité physique (20);
- déclencher le mécanisme de distribution (22) pour libérer une portion de nourriture lorsque l'activité physique a été détectée.
